# FASCICULE DE BREVET EUROPEEN

(11) **EP 3 165 793 B1**
(45) Date de publication et mention de la délivrance du brevet: **06.10.2021**
(21) Numéro de dépôt: 16195657.8
(22) Date de dépôt: 26.10.2016
(51) Int. Cl.: F16H 25/20

(54) **ACTIONNEUER LINÉAIRE ET UN PROCÉDÉ CORRESPONDANT**
LINEARAKTUATOR UND ENTSPRECHENDES VERFAHREN
LINEAR ACTUATOR AND CORRESPONDING METHOD

(30) Priorité: 06.11.2015 FR 1502340
(43) Date de publication de la demande: 10.05.2017
(73) Titulaire: Thales, 92400 Courbevoie (FR); Centre National d'Etudes Spatiales, 75039 Paris Cedex 01 (FR)
(72) Inventeur: CHASSOULIER, Damien, 06370 Mouans-Sartoux (FR); STANEK, Didier, 06150 Cannes La Bocca (FR); BLANC, Alain-Vincent, 06130 Grasse (FR)
(74) Mandataire: Marks & Clerk France

(56) Documents cités:
- EP-A1- 0 036 379
- EP-A1- 2 570 691
- DE-A1-102008 061 115
- DE-U1- 20 213 740
- US-A1- 2002 074 866

## Description

La présente invention concerne le domaine des actionneurs linéaires mécaniques. La présente invention concerne plus particulièrement un actionneur linéaire et un procédé correspondant.

La présente invention peut trouver une application par exemple dans le domaine spatial. Pour les applications spatiales, ajouter des capteurs sur un mini actionneur afin de mesurer différentes informations comme une défaillance de l'actionneur, la position, le début ou la fin de course de la tige de l'actionneur ou tout autre information, peut être compliqué et coûteux du fait des contraintes d'encombrement de redondance et de poids liées à ce domaine. De plus certains capteurs sont peu précis et peu fiables et donc incompatibles avec le domaine spatial.

C'est notamment le cas du brevet US 2002/074866 qui présente un actionneur linéaire comprenant un arbre de vis entrainé par un moteur capable de convertir un mouvement rotatif en un mouvement linéaire et une butée d'amortissement. Le brevet US 2002/074866 requiert aussi l'ajout d'un capteur de surcharge permettant notamment de couper l'alimentation électrique du moteur. La solution présentée divulguée ici présente l'inconvénient de devoir ajouter un capteur supplémentaire, induisant des coûts supplémentaires, un encombrement accru et du poids.

Un but de l'invention est notamment de corriger tout ou partie des inconvénients de l'art antérieur en proposant une solution simple permettant d'améliorer la fiabilité d'un actionneur linéaire mécanique sans augmenter l'encombrement ni son poids.

A cet effet, l'invention a pour objet un actionneur linéaire selon la revendication 1.

D'autres modes de réalisation de l'invention sont présentés dans les revendications dépendantes.

Suivant un mode de réalisation, le groupe de jauges de contrainte comprend au moins quatre jauges de contrainte, lesdites jauges étant connectées entre elles de manière à former au moins un pont de Wheatstone.

Suivant un mode de réalisation, au moins une butée mécanique est réalisée dans un matériau élastique.

Suivant un mode de réalisation, l'actionneur comprend un dispositif de réduction couplé en sortie du moteur.

Suivant un mode de réalisation, au moins une valeur prédéterminée traduit une position prédéterminée de la partie mobile en translation du dispositif de transformation d'un mouvement de rotation en un mouvement de translation.

Suivant un mode de réalisation, la position prédéterminée est un début de course de la partie mobile en translation.

Suivant un mode de réalisation, la position prédéterminée est une fin de course de la partie mobile en translation.

Suivant un mode de réalisation, une valeur prédéterminée traduit un fonctionnement anormal de l'actionneur.

Un autre objet de l'invention est un procédé selon la revendication 10.

D'autres particularités et avantages de la présente invention, qui est définie par les revendications suivantes, apparaîtront plus clairement à la lecture de la description ci-après, donnée à titre illustratif et non limitatif, et faite en référence aux dessins annexés, sur lesquels :
- La figure 1 représente de façon schématique un exemple d'actionneur selon l'invention ;
- La figure 2a représente un exemple de mode de réalisation d'une butée mécanique ;
- La figure 2b représente un exemple de mode de réalisation d'un actionneur avec deux groupes de jauges de contraintes ;
- La figure 3 illustre le chemin d'effort ;
- La figure 4a représente une vue en coupe d'un exemple de mode de réalisation d'un actionneur selon l'invention ;
- La figure 4b illustre le chemin d'effort sur le précédent exemple de mode de réalisation.

Le principe de l'invention repose sur l'utilisation de jauges de contraintes pour relever différentes informations sur l'état d'un actionneur linéaire mécanique.

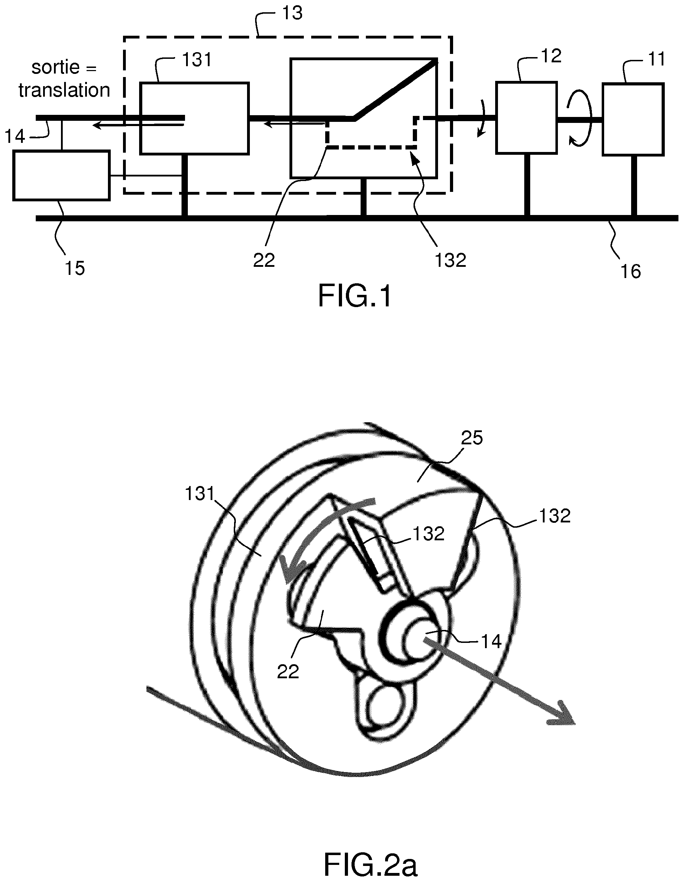

La figure 1 représente, de façon schématique, un exemple de mode de réalisation d'un actionneur linéaire électromécanique selon l'invention. L'actionneur comprend un moteur 11, un dispositif de transformation d'un mouvement de rotation en un mouvement de translation 13. Ces différents moyens sont abrités à l'intérieur de l'enveloppe 16 de l'actionneur.

Le moteur 11 est couplé au dispositif de transformation d'un mouvement de rotation en un mouvement de translation 13 et est configuré pour entrainer ce dernier en rotation. Le moteur 11 peut être par exemple un moteur de type pas à pas ou tout autre type de moteur électrique connu de l'homme du métier.

Suivant une variante de réalisation, l'actionneur linéaire peut comprendre un dispositif de réduction 12 connecté entre le moteur 11 et le dispositif de transformation d'un mouvement de rotation en un mouvement de translation 13.

Le dispositif de transformation d'un mouvement de rotation en un mouvement de translation 13 est, par exemple, un dispositif de type vis/écrou, une vis à rouleaux, une vis à billes ou tout autre dispositif équivalent. La rotation du moteur 11 couplé à ce dispositif 13 entraine en translation une partie mobile 14 du dispositif de transformation d'un mouvement de rotation en un mouvement de translation 13.

Le dispositif de transformation d'un mouvement de rotation 13 possède une partie tournante en entrée et une partie qui se translate en sortie. Il existe un frottement entre ces deux parties. Si la partie configurée pour se translater est libre de tourner, elle tournera à cause des frottements, et peut-être aussi se translatera partiellement selon les autres contraintes qu'elle subit. Afin que la partie configurée pour se translater joue son rôle, le dispositif de transformation d'un mouvement de rotation en un mouvement de translation 13 comprend un dispositif de blocage en rotation 131 par rapport à l'enveloppe 16 de l'actionneur ou système anti-rotation. Ce dispositif 131 est solidaire de l'enveloppe 16 de l'actionneur. Il s'agit d'une pièce mécanique dont la fonction est l'arrêt en rotation du dispositif de transformation du mouvement de rotation en un mouvement de translation 13. Ce dispositif de blocage 131 peut être un soufflet.

Le dispositif de blocage 131 doit être le plus raide possible en torsion pour que la rotation soit la plus faible possible et la translation la plus parfaite possible. Le dispositif de blocage 131 doit aussi être le plus souple possible en translation pour ne pas empêcher la translation de se faire. Or, dans un encombrement donné, ces deux exigences sont contradictoires. Un système ou une pièce mécanique, ne peut pas être aussi souple que l'on veut en translation en même temps qu'aussi raide que l'on souhaiterait en torsion, il y a donc un compromis à trouver. De ce fait la raideur en torsion n'est pas aussi grande que l'on souhaite, contrairement à la raideur en torsion du carter, par exemple, ce qui fait que le dispositif de blocage 131 est, en général, l'élément le plus souple en torsion du chemin d'effort 30.

La partie mobile 14 en translation du dispositif de transformation du mouvement de rotation en un mouvement de translation 13 comprend un ergot 22 ou une dent. Lors du déplacement de la partie mobile 14, cet ergot 22 effectue un mouvement hélicoïdal, régulier ou non, relatif par rapport à la butée 132 en rotation.

L'actionneur linéaire comprend au moins une butée mécanique 132 placée sur une partie fixe dudit l'actionneur. Chaque butée 132 est configurée pour coopérer avec l'ergot 22 et faire obstacle au déplacement en translation de ce dernier lorsque la partie mobile 14, ou tige de l'actionneur, atteint une position prédéterminée.

Suivant un mode de réalisation, l'actionneur comprend deux butées mécaniques 132, une butée de début de course et une butée de fin de course.

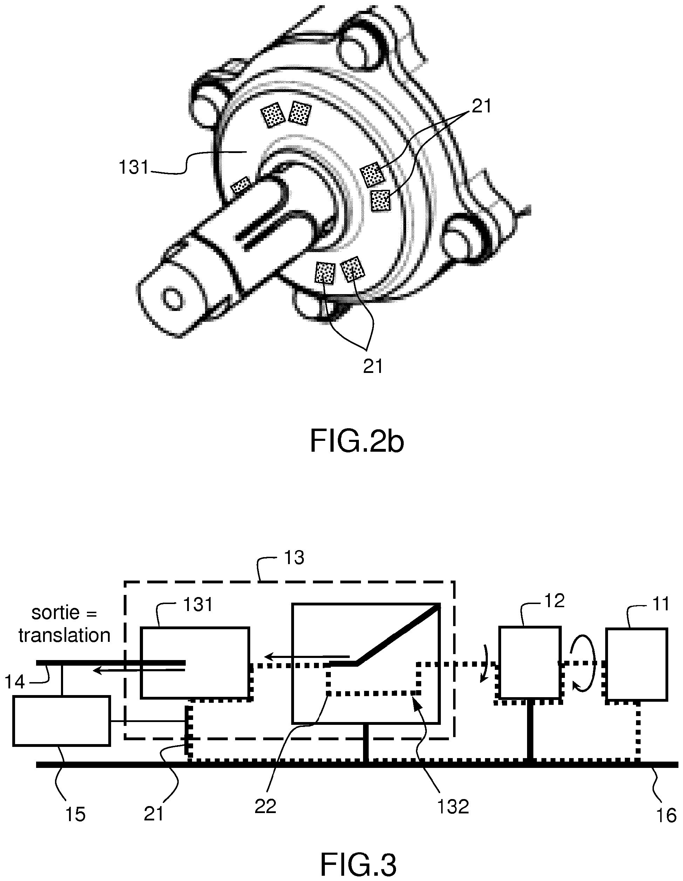

A titre d'exemple, la figure 2 illustre un de mode de réalisation particulier d'un ergot 22 et de butées mécaniques 132 dans le cas d'un micro actionneur linéaire à faible débattement. Dans ce mode de réalisation, les deux butées 132 sont sur une même pièce mécanique 25.

Lorsque l'ergot 22 arrive en contact avec une butée 132, il se créé un couple dont l'effort va se propager tout au long du chemin d'effort 30. En référence à la figure 3, le chemin d'effort 30 correspond à l'ensemble des pièces de l'actionneur sur lesquelles se transmet ledit effort.

L'actionneur comprend un dispositif de contrôle comprenant au moins une jauge de contrainte 21 et un module de contrôle 15.

En référence à la figure 3, le groupe d'au moins une jauge de contrainte 21 est configuré pour générer un signal représentatif du couple ou de l'effort détecté. La ou les jauges de contrainte 21 peuvent être placées sur un élément quelconque du chemin d'effort 30. Suivant un mode de réalisation préféré, le groupe d'au moins une jauge de contrainte est placé sur l'élément le plus souple du chemin d'effort 30 permettant une plus grande déformation. De façon préférentielle, le groupe d'au moins une jauge de contraintes 21 est placé sur le dispositif de blocage en rotation 131 du dispositif de transformation du mouvement de rotation en un mouvement de translation 13. Ce dispositif 131 étant l'élément le moins raide, c'est-à-dire le plus souple en rotation du chemin d'effort 30, c'est donc sur cette pièce qu'il est le plus intéressant de placer la ou les jauges de contraintes 21. De plus, le dispositif de blocage en rotation 131 est disposé à une extrémité de l'actionneur ce qui permet de placer le groupe de jauges de contraintes 21 à l'extérieur de l'actionneur et évite ainsi d'avoir à faire traverser les fils de connexion à travers l'enveloppe 16 de l'actionneur.

De façon préférentielle, les jauges de contraintes sont regroupées par quatre et sont connectées entre elles de manière à former au moins un pont de Wheatstone. Pour des questions de redondance, l'actionneur peut comprendre deux groupes de quatre jauges de contraintes 21 comme illustré sur la figure 2b.

La ou les jauges de contrainte 21 sont connectées à un module de contrôle 15 configuré pour comparer l'amplitude du signal généré par le groupe d'au moins une jauge de contrainte 21 à au moins une valeur prédéterminée.

Les valeurs prédéterminées peuvent traduire différents états de l'actionneur. Par exemple, une certaine valeur prédéterminée peut correspondre au couple généré par l'ergot 22 venant en contact avec une butée mécanique 132. Dans le cas de butées de début et de fin de course, le signe du signal généré par la ou les jauges peut permettre de différencier le début de la fin de course. De façon avantageuse le même groupe de jauges de contraintes permet de détecter à la fois le début et la fin de course de l'actionneur ce qui permet de réduire le nombre de capteurs et donc le poids et l'encombrement du dipositif.

Suivant un mode de réalisation, au moins une butée mécanique 132 est réalisée à l'aide d'un matériau souple ou élastique comme par exemple de l'élastomère. De façon avantageuse, la réalisation de butées souples permet une montée progressive de l'effort lorsque l'ergot 22 entre en contact avec une butée mécanique 132 et laisse donc plus de temps à l'électronique du module de contrôle 15 pour détecter l'effort généré. Cela permet d'utiliser une électronique moins rapide. La réalisation de butées mécaniques 132 souples permet également d'augmenter le temps entre le contact de l'ergot avec une butée mécanique et le moment où le couple généré par l'effort est maximum. Cela permet, par exemple au module de contrôle 15, de couper l'alimentation du moteur 11 avant que le couple ne soit maximum et évite donc de d'endommager l'actionneur voir de le détruire.

Les jauges de contraintes 21 permettent également de donner des informations sur l'état de l'actionneur même lorsque ce dernier n'est pas en butée. Les jauges 21 permettent d'observer un effort sur un ou plusieurs composants de l'actionneur. Si la valeur de l'effort observé est différente de sa valeur nominale cela peut traduire un fonctionnement anormal, une usure, le blocage d'une pièce ou toute autre anomalie. Le dispositif permet donc une détection d'anomalie en fonctionnel, pendant l'utilisation de l'actionneur.

Par exemple, dans le cas d'un actionneur effectuant des micro-manœuvres, au bout d'un certain temps, la graisse des roulements à billes ou des vis à rouleau est chassée petit à petit de chaque coté des billes ou des rouleaux. Après un grand nombre de manœuvres, les billes ou les rouleaux vont se retrouver à sec avec des contacts métal contre métal entrainant plus de frottements et donc des déplacements plus difficiles. Cette anomalie pourra être détectée par le module de contrôle 15 via le signal généré par les jauges de contrainte et ce module 15 pourra envoyer un signal de commande à l'actionneur afin qu'il effectue une manœuvre de relubrification comme par exemple des déplacements de plus forte amplitude afin de répartir les graisses.

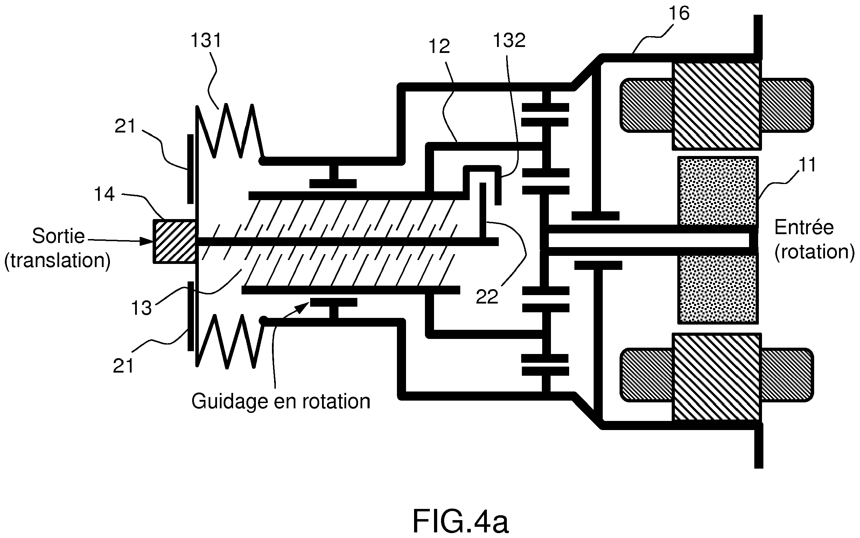

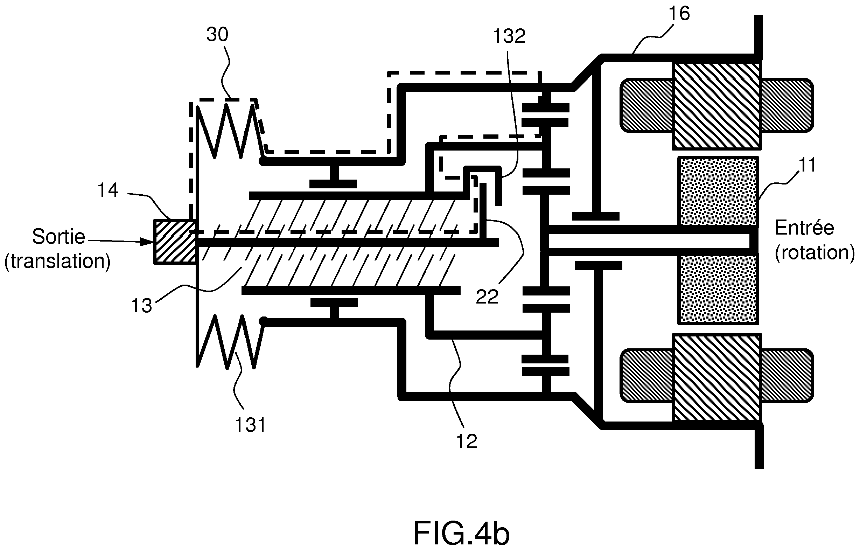

A titre d'exemple, les figures 4a et 4b illustrent un mode de réalisation particulier d'un actionneur linéaire mécanique selon l'invention dans lequel le dispositif de blocage en rotation 131 est un soufflet. La figure 4b illustre le chemin d'effort 30 sur cet exemple de mode de réalisation.

Le dispositif de contrôle peut être utilisé, par exemple par le module de contrôle 15, pour envoyer un signal de commande permettant de couper l'alimentation du moteur 11 afin de stopper la course de la partie mobile 14 en translation du dispositif de transformation d'un mouvement de rotation en un mouvement de translation 13 lorsque l'amplitude du signal généré par le groupe d'au moins une jauge de contraintes 21 est supérieur ou égale à une valeur prédéterminée. Cette valeur prédéterminé de l'amplitude du signal issu des jauges de contraintes 21 peut par exemple traduire un début ou une fin de course de l'actionneur.

De façon avantageuse, l'invention permet de réaliser un capteur de début et/ou de fin de course d'actionneur linéaire simple, fiable et compact, occupant très peu de place.

Suivant un mode de mise en œuvre de l'invention, le dispositif de contrôle de l'actionneur linéaire peut permettre de réinitialiser et/ou d'initialiser l'information de position de la partie mobile 14 en translation du dispositif de transformation d'un mouvement de rotation en un mouvement de translation 13 de l'actionneur linéaire par rapport à au moins une position prédéterminée.

Par exemple, en fonctionnement normal, la partie mobile 14 en translation de l'actionneur linéaire peut se déplacer entre deux butées mécaniques 132 sans les atteindre. Dans ce cas les butées 132 ne servent pas de butées de début et de fin de course mais de butées de référence permettant de fixer une référence de position pour la partie mobile 14. Suivant une variante de réalisation, l'actionneur peut ne comprendre qu'une seule butée mécanique 132 de référence. La position de la partie mobile 14 est déterminée de façon relative par rapport à au moins une position de référence correspondant à la position des butées de références. A cet effet, l'actionneur peut comprendre un module de positionnement configuré pour délivrer une information de position de la partie mobile 14 en translation.

Le moteur 11 de l'actionneur peut être un moteur pas à pas et le module de positionnement peut être configuré pour compter les pas dudit moteur 11 afin de délivrer un signal représentatif de la position relative de la partie mobile par rapport à au moins une position de référence.

Suivant une variante de réalisation, l'actionneur peut comprendre un dispositif de comptage de tours configuré pour délivrer un signal représentatif du nombre de tours de l'arbre du moteur 11 ou du réducteur 12 au module de positionnement afin que ce dernier calcule la position relative de la partie mobile 14 par rapport à la ou les références de position.

Afin de réinitialiser l'information de position de la partie mobile 14, par exemple suite à une opération de maintenance sur l'actionneur, suite à une défaillance de ce dernier ou de façon régulière pour assurer un bon fonctionnement de l'actionneur, ce dernier peut comprendre une procédure de réinitialisation mise en œuvre par exemple par le module de positionnement et/ou le module de contrôle. Le module de positionnement peut par exemple envoyer au module de contrôle 15 un signal de réinitialisation afin d'entrainer le moteur 11 en rotation dans un certain sens afin de déplacer la partie mobile en translation jusqu'à une butée mécanique 132. Pendant le déplacement de la partie mobile, l'amplitude du signal délivré par le groupe d'au moins une jauge de contrainte est comparée avec une valeur prédéterminée traduisant une position de référence de la partie mobile 14 en translation. Lorsque la valeur de l'amplitude du signal délivré par le groupe d'au moins une jauge de contrainte 21 est supérieure ou égale à ladite valeur prédéterminée, le module de contrôle peut envoyer un signal de commande en direction du moteur afin de stopper son alimentation et arrêter le déplacement de la partie mobile 14. Le module de positionnement peut se réinitialiser en enregistrant une valeur prédéterminée, comme par exemple zéro, dans une zone mémoire afin de prendre cette position comme référence.

Selon un mode de mise en œuvre, la procédure de réinitialisation peut prévoir un déplacement de la partie mobile 14 jusqu'à la seconde butée mécanique 132 de référence afin que le module de positionnement enregistre une nouvelle valeur prédéterminée correspondant à cette seconde position de référence.

Cette procédure de réinitialisation peut être mise en œuvre lors de la première utilisation de l'actionneur afin d'initialiser le module de positionnement.

Les différents modules comme les module de contrôle et module de position peuvent être un ou plusieurs microprocesseurs, processeurs, ordinateurs ou tous autres moyens équivalents programmés de façon opportune.

## Revendications

1. Actionneur linéaire comprenant un dispositif de contrôle, une enveloppe (16) et un moteur (11) couplé à un dispositif (13) de transformation d'un mouvement de rotation, engendré par le moteur, en un mouvement de translation, configuré pour déplacer en translation une partie mobile (14), la partie mobile (14) comprenant un ergot (22),
le dispositif (13) comprennant un dispositif de blocage en rotation (131) par rapport à l'enveloppe (16) de l'actionneur,
l'actionneur comprenant en outre un groupe d'au moins une butée mécanique (132)configurée pour fixer une référence de position pour la partie mobile (14), le groupe d'au moins une butée mécanique (132) étant configuré pour faire obstacle au mouvement de translation de l'ergot (22) lorsque ce dernier atteint au moins une position prédéterminée, le contact dudit ergot (22) sur la butée (132) générant un couple, dont l'effort se propage à l'ensemble des éléments du dispositif,
ledit actionneur étant **caractérisé en ce que** le dispositif de contrôle comprend un module de contrôle (15) et un groupe d'au moins une jauge de contrainte (21) configuré pour générer un signal représentatif de l'effort détecté, le module de contrôle (15) étant connecté au groupe d'au moins une jauge de contrainte (21) et étant configuré pour comparer l'amplitude du signal généré par le groupe d'au moins une jauge de contrainte (21) à au moins une valeur prédéterminée,
et **en ce que** ladite au moins une jauge de contrainte (21) est placée sur un des éléments de l'actionneur auxquels l'effort induit par le couple est transmis.

2. Actionneur linéaire selon la revendication 1, dans lequel le groupe de jauges de contrainte comprend au moins quatre jauges de contrainte (21), lesdites jauges étant connectées entre elles de manière à former au moins un pont de Wheatstone.

3. Actionneur linéaire selon une des revendications précédentes dans lequel ladite au moins une butée mécanique (132) est réalisée dans un matériau élastique.

4. Actionneur linéaire selon une des revendications précédentes dans lequel l'actionneur comprend un dispositif de réduction (12) couplé en sortie du moteur (11).

5. Actionneur linéaire selon une des revendications précédentes dans lequel ladite au moins une valeur prédéterminée traduit une position prédéterminée de la partie mobile en translation (14) du dispositif de transformation d'un mouvement de rotation en un mouvement de translation (13).

6. Actionneur linéaire selon la revendication 5 dans lequel la position prédéterminée est un début de course de la partie mobile en translation (14).

7. Actionneur linéaire selon la revendication 5 dans lequel la position prédéterminée est une fin de course de la partie mobile en translation (14).

8. Actionneur linéaire selon l'une quelconque des revendications précédentes dans lequel une valeur prédéterminée traduit un fonctionnement anormal de l'actionneur.

9. Actionneur linéaire selon l'une quelconque des revendications précédentes dans lequel le module de contrôle (15) est configuré pour stopper la course de la partie mobile (14) en translation du dispositif de transformation d'un mouvement de rotation en un mouvement de translation (13) lorsque l'amplitude du signal généré par le groupe d'au moins une jauge de contrainte (21) est supérieure ou égale à une valeur prédéterminée.

10. Procédé de réinitialisation d'une information relative à la position de la partie mobile (14) en translation du dispositif de transformation d'un mouvement de rotation en un mouvement de translation (13) de l'actionneur linéaire selon l'une des revendications 1 à 9, ledit actionneur comprenant un module de positionnement configuré pour délivrer une information de position de la partie mobile en translation (14) par rapport à au moins une position prédéterminée, ledit procédé étant **caractérisé en ce qu'**il comprend :
- une étape de mise en mouvement du moteur (11) dans un sens donné,
- une étape de comparaison de l'amplitude du signal délivré par le groupe d'au moins une jauge de contrainte (21) avec une valeur prédéterminée traduisant une position prédéterminée de la partie mobile (14) en translation,
- Si la valeur de l'amplitude du signal délivré par le groupe d'au moins une jauge de contrainte (21) est supérieure ou égale à ladite valeur prédéterminée, une étape d'arrêt du moteur (11) et de réinitialisation du module de positionnement.

## Patentansprüche

1. Linearaktuator, welcher eine Steuervorrichtung, ein Gehäuse (16) und einen Motor (11) umfasst, gekoppelt mit einer Vorrichtung (13) zum Umwandeln einer vom Motor erzeugten Rotationsbewegung in eine Translationsbewegung, konfiguriert zum Translationsbewegen eines beweglichen Teils (14), wobei das bewegliche Teil (14) einen Nocken (22) umfasst,
wobei die Vorrichtung (13) eine Rotationssperrvorrichtung (131) in Bezug auf das Gehäuse (16) des Aktuators umfasst,
wobei der Aktuator ferner eine Gruppe von mindestens einem mechanischen Anschlag (132) umfasst, konfiguriert zum Festlegen einer Positionsreferenz für das bewegliche Teil (14), wobei die Gruppe von mindestens einem mechanischen Anschlag (132) zum Blockieren der Translationsbewegung des Nockens (22) konfiguriert ist, wenn dieser mindestens eine vorbestimmte Position erreicht, wobei der Kontakt des Nockens (22) mit dem Anschlag (132) ein Drehmoment erzeugt, dessen Kraft sich auf alle Elemente der Vorrichtung ausbreitet,
wobei der Aktuator **dadurch gekennzeichnet ist, dass** die Steuervorrichtung ein Steuermodul (15) und eine Gruppe von mindestens einem Dehnungsmessstreifen (21) umfasst, konfiguriert zum Erzeugen eines für die erfasste Kraft repräsentativen Signals, wobei das Steuermodul (15) mit der Gruppe von mindestens einem Dehnungsmessstreifen (21) verbunden und zum Vergleichen der Amplitude des von der Gruppe von mindestens einem Dehnungsmessstreifen (21) erzeugten Signals mit mindestens einem vorbestimmten Wert konfiguriert ist,
und dadurch, dass der mindestens eine Dehnungsmessstreifen (21) an einem der Elemente des Aktuators angeordnet ist, auf das die drehmomentinduzierte Kraft übertragen wird.

2. Linearaktuator nach Anspruch 1, wobei die Dehnungsmessstreifengruppe mindestens vier Dehnungsmessstreifen (21) umfasst, wobei die Messstreifen zum Bilden von mindestens einer Wheatstone-Brücke miteinander verbunden sind.

3. Linearaktuator nach einem der vorherigen Ansprüche, wobei der mindestens eine mechanische Anschlag (132) aus einem elastischen Material hergestellt ist.

4. Linearaktuator nach einem der vorherigen Ansprüche, wobei der Aktuator eine am Ausgang des Motors (11) gekoppelte Reduktionsvorrichtung (12) aufweist.

5. Linearaktuator nach einem der vorherigen Ansprüche, wobei der mindestens eine vorbestimmte Wert eine vorbestimmte Position des translationsbeweglichen Teils (14) der Vorrichtung zum Umwandeln einer Rotationsbewegung in eine Translationsbewegung (13) übersetzt.

6. Linearaktuator nach Anspruch 5, wobei die vorbestimmte Position ein Startpunkt für den Bewegungsverlauf des translationsbeweglichen Teils (14) ist.

7. Linearaktuator nach Anspruch 5, wobei die vorbestimmte Position ein Endpunkt des Bewegungsverlaufs des translationsbeweglichen Teils (14) ist.

8. Linearaktuator nach einem der vorherigen Ansprüche, wobei ein vorbestimmter Wert einen anormalen Betrieb des Aktuators angibt.

9. Linearaktuator nach einem der vorherigen Ansprüche, wobei das Steuermodul (15) zum Stoppen des Bewegungsverlaufs des translationsbeweglichen Teils (14) der Vorrichtung zum Umwandeln einer Rotationsbewegung in eine Translationsbewegung (13) konfiguriert ist, wenn die Amplitude des von der Gruppe von mindestens einem Dehnungsmessstreifen (21) erzeugten Signals genauso groß wie oder größer als ein vorbestimmter Wert ist.

10. Verfahren zum Neuinitialisieren von Informationen bezüglich der Position des translationsbeweglichen Teils (14) der Vorrichtung zum Umwandeln einer Rotationsbewegung in eine Translationsbewegung (13) des Linearaktuators nach einem der Ansprüche 1 bis 9, wobei der Aktuator ein Positionierungsmodul umfasst, das zum Liefern von Positionsinformationen des translationsbeweglichen Teils (14) in Bezug auf mindestens eine vorbestimmte Position konfiguriert ist, wobei das Verfahren **dadurch gekennzeichnet ist, dass** es Folgendes umfasst:
- einen Schritt des Inbewegungversetzens des Motors (11) in einer bestimmten Richtung,
- einen Schritt des Vergleichens der Amplitude des von der Gruppe von mindestens einem Dehnungsmessstreifen (21) gelieferten Signals mit einem vorbestimmten Wert, der eine vorbestimmte Position des translationsbeweglichen Teils (14) angibt,
- einen Schritt des Anhaltens des Motors (11) und des Neuinitialisierens des Positionierungsmoduls, wenn der Wert der Amplitude des von der Gruppe von mindestens einem Dehnungsmessstreifen (21) gelieferten Signals genauso groß wie oder größer als der vorbestimmte Wert ist.

## Claims

1. Linear actuator comprising a control device, a casing (16) and a motor (11) coupled to a device (13) for transforming a rotational movement, generated by the motor, into a translational movement, configured to move in translation a movable part (14), the movable part (14) comprising a stud (22),
the device (13) comprising a rotation-blocking device (131) relative to the casing (16) of the actuator,
the actuator further comprising a group of at least one mechanical stop (132) configured to fix a position reference for the moving part (14), the group of at least one mechanical stop (132) being configured to obstruct the translational movement of the stud (22) when the latter reaches at least one predetermined position, the contact of said stud (22) with the stop (132) generating a torque, the force of which is propagated to all the elements of the device,
said actuator being **characterized in that** the control device comprises a control module (15) and a group of at least one strain gauge (21) configured to generate a signal representative of the force detected, the control module (15) being connected to the group of at least one strain gauge (21) and being configured to compare the amplitude of the signal generated by the group of at least one strain gauge (21) to at least one predetermined value,
and **in that** said at least one strain gauge (21) is placed on one of the elements of the actuator to which the force induced by the torque is transmitted.

2. Linear actuator according to claim 1, wherein the group of strain gauges comprises at least four strain gauges (21), said gauges being connected to one another in such a way as to form at least one Wheatstone bridge.

3. Linear actuator according to one of the preceding claims, wherein at least one mechanical stop (132) is made from an elastic material.

4. Linear actuator according to one of the preceding claims, in which the actuator comprises a reduction device (12) coupled at the output of the motor (11).

5. Linear actuator according to one of the preceding claims, wherein the at least one predetermined value indicates a predetermined position of the translationally mobile part (14) of the device for converting a rotational movement into a translational movement (13).

6. Linear actuator according to claim 5, wherein the predetermined position is a start of travel of the translationally mobile part (14).

7. Linear actuator according to claim 5, wherein the predetermined position is an end of travel of the translationally mobile part (14).

8. Linear actuator according to one of the preceding claims, wherein a predetermined value indicates abnormal operation of the actuator.

9. Linear actuator according to any one of the preceding claims, wherein the control module (15) is configured to stop the travel of the mobile part (14) in translation of the device for converting a rotational movement into a translational movement (13) when the amplitude of the signal generated by the group of at least one strain gauge (21) is greater than or equal to a predetermined value.

10. Method for resetting information regarding the position of the translationally mobile part (14) of the device for converting a rotational movement into a translational movement (13) of the linear actuator according to any of claims 1 to 9, the said actuator comprising a positioning module configured to deliver information regarding the position of the translationally mobile part (14) with respect to at least one predetermined position, the said method being **characterized in that** it comprises:
- a step of setting the motor (11) in motion in a given direction,
- a step of comparing the amplitude of the signal delivered by the group of at least one strain gauge (21) against a predetermined value indicating a predetermined position of the translationally mobile part (14),
- if the value of the amplitude of the signal delivered by the group of at least one strain gauge (21) is greater than or equal to the said predetermined value, a step of stopping the motor (11) and of resetting the positioning module.
